# EUROPEAN PATENT APPLICATION

(11) **EP 2 381 638 A1**
(43) Date of publication of application: **26.10.2011**
(21) Application number: 10171250.3
(22) Date of filing: 29.07.2010
(51) Int. Cl.: H04L 29/06, H04W 36/00

(54) **Method, system and apparatus for managing call handoff**

(30) Priority: 26.04.2010 US 327987 P
(71) Applicant: Research In Motion Limited, Waterloo, ON N2L 3W8 (CA)
(72) Inventor: Zeng, Ximing, Waterloo Ontario N2L 3X2 (CA); Yin, Haiyang, Waterloo Ontario N2L 3X2 (CA); Ruan, Zhigang, Waterloo Ontario N2L 3X2 (CA)
(74) Representative: MERH-IP Matias Erny Reichl Hoffmann

(57) **Abstract**

According to embodiments described in the specification, a method, system and apparatus for managing call handoff are provided, comprising: receiving a request from a mobile electronic device to initiate handover of a first media session between the mobile electronic device and a private branch exchange (PBX) from a first transport to a second transport; establishing a second media session with the mobile electronic device over the second transport; shuffling call media from the first media session to the second media session; and responsive to shuffling the call media, terminating the first media session.

## Description

### FIELD

The specification relates generally to telecommunications, and specifically to a method, system and apparatus for managing call handoff.

### BACKGROUND

The computational capabilities of mobile electronic devices (such as cellular phones, smart phones and the like), as well as the capabilities of their associated networks, continue to grow. At the same time, ever greater demands for increased functionality are imposed on such devices and networks. Thus, despite the growing capabilities of mobile devices and wireless networks, they remain less able to meet those demands than their mains-powered and wired counterparts..

### GENERAL

According to an aspect of the specification, a method of managing call handoff is provided, comprising: receiving a request from a mobile electronic device to initiate handover of a first media session between the mobile electronic device and a private branch exchange (PBX) from a first transport to a second transport; establishing a second media session with the mobile electronic device over the second transport; shuffling call media from the first media session to the second media session; and responsive to shuffling the call media, terminating the first media session.

According to another aspect of the specification, a method of initiating call handoff is provided, comprising: monitoring available transports; receiving input data indicative of a command to provide call handoff options; controlling a display device to generate a representation of at least one call handoff option based on the results of the monitoring; receiving input data indicative of a command to move an ongoing call from a first transport to a second transport; and transmitting a call handoff request.

According to a further aspect of the specification, a server for managing call handoff is provided, comprising: a communications interface for receiving a request from a mobile electronic device to initiate handover of a first media session between the mobile electronic device and a private branch exchange (PBX) from a first transport to a second transport; a memory; and a processor interconnected with the communications interface and the memory, the processor configured to receive the request from the communications interface, to establish a second media session with the mobile electronic device over the second transport; to shuffle call media from the first media session to the second media session; and responsive to shuffling the call media, to terminate the first media session..

According to yet another aspect of the specification, a mobile electronic device for initiating call handoff is provided, comprising: an input device for receiving input data indicative of a command to provide call handoff options, and for receiving further input data indicative of a command to move an ongoing call from a first transport to a second transport; a display device for generating representations of data; a memory; a communications interface for transmitting a call handoff request; and a processor interconnected with the display device, the memory and the communications interface, the processor configured to monitor available transports; receive the input data from the input device; to control the display device to generate a representation of at least one call handoff option based on the results of the monitoring; to receive the further input data; and to cause the communications interface to transmit the call handoff request.

### BRIEF DESCRIPTIONS OF THE DRAWINGS

Embodiments are described with reference to the following figures, in which:

Figure 1 depicts a system for managing enterprise-related communications, according to a non-limiting embodiment;

Figure 2 depicts a schematic block diagram of the mobile electronic device of Figure 1, according to a non-limiting embodiment;

Figure 3 depicts a schematic block diagram of the Service Management Platform (SMP) of Figure 1, according to a non-limiting embodiment;

Figure 4 depicts a signalling diagram generally indicating how mobile-originated, mobile-initiated calls are processed by the system of Figure 1, according to a non-limiting embodiment;

Figure 5 depicts a signalling diagram generally indicating how mobile-originated, PBX-initiated, calls are processed by the system of Figure 1, according to a non-limiting embodiment;

Figure 6 depicts a signalling diagram generally indicating how mobile-terminated, mobile-initiated calls are processed by the system of Figure 1, according to a non-limiting embodiment;

Figure 7 depicts a signalling diagram generally indicating how mobile-terminated, PBX-initiated calls are processed by the system of Figure 1, according to a non-limiting embodiment;

Figure 8 depicts a method of initiating call handoff, according to a non-limiting embodiment;

Figure 9 depicts representations of data generated on a display of the mobile electronic device of Fig. 2, according to a non-limiting embodiment;

Figure 10 a method of managing call handoff, according to a non-limiting embodiment;

Figure 11 depicts a signalling diagram for performance of the method of Figure 10 in a call handoff from a mobile transport to a Wi-Fi transport;

Figure 12 depicts an additional signalling diagram for performance of the method of Figure 10 in a call handoff from a mobile transport to a Wi-Fi transport;

Figure 13 depicts a signalling diagram for performance of the method of Figure 10 in a call handoff from a Wi-Fi transport to a mobile transport; and

Figure 14 depicts an additional signalling diagram for performance of the method of Figure 10 in a call handoff from a Wi-Fi transport to a mobile transport..

### DETAILED DESCRIPTION OF THE EMBODIMENTS

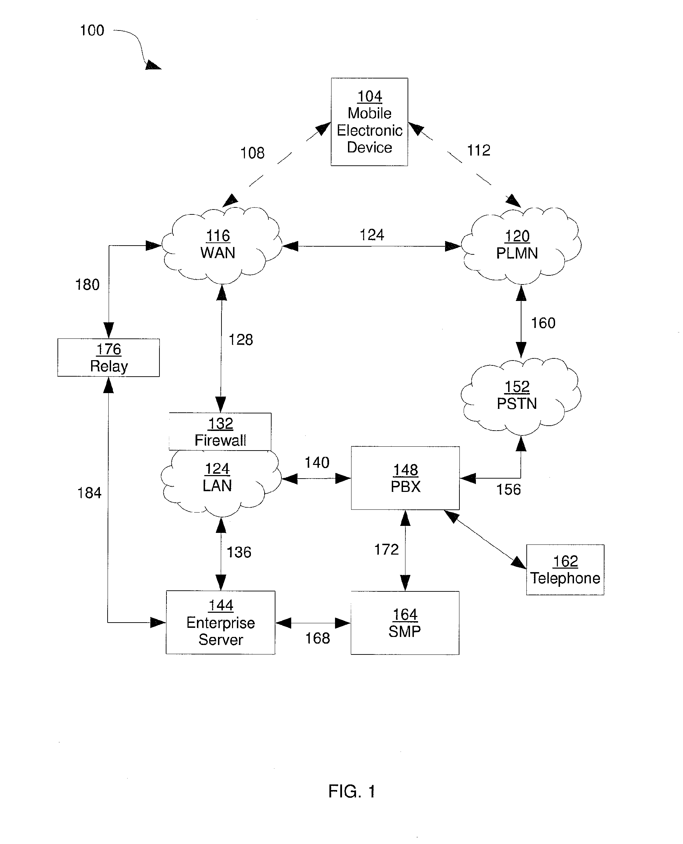

Figure 1 depicts a system 100 for managing calls over various transports.. It will now be apparent that although reference may be made herein to "calls," the described systems and methods are applicable to session-based communications in general and not limited to voice calls. It will also be appreciated that the systems and methods need not be limited to sessions and may also be applicable to messaging-based communications in some embodiments.

System 100 includes a mobile electronic device 104, which in the present embodiment is based on the computing environment and functionality of a hand-held wireless communication device. It will be understood, however, that mobile electronic device 104 is not limited to a hand-held wireless communication device. Other mobile electronic devices are possible, such as cellular telephones, smart telephones, Personal Digital Assistants ("PDAs"), media or MP3 players, laptop computers and the like.

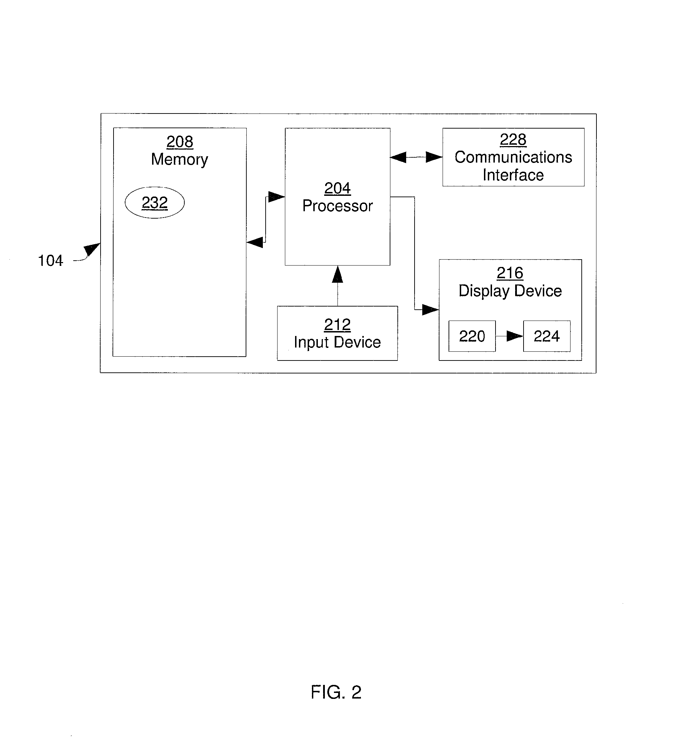

Referring now to Figure 2, certain internal components of mobile electronic device 104 are shown in greater detail. Mobile electronic device 104 includes a processor 204 interconnected with a memory 208. Memory 208 can comprise any suitable combination of volatile (e.g. Random Access Memory ("RAM")) and non-volatile (e.g. read only memory ("ROM"), Electrically Erasable Programmable Read Only Memory ("EEPROM"), flash memory, magnetic computer storage device, or optical disc) memory, Mobile electronic device 104 also includes an input device 212 interconnected with processor 204. Input device 212 is generally configured to provide input data to processor 204 and can include any suitable one of, or combination of, keypads, microphones, touch screens and the like.

Mobile electronic device 104 also includes a display device 216. Display device 216 includes display circuitry 220 for generating representations, such as representation 224, of data. Display device 216 and circuitry 220 can be controlled by processor 208 for generating representation It will now be apparent that display device 216 can include any suitable one of, or combination of, a flat panel display (e.g.. Liquid Crystal Display (LCD), Organic Light Emitting Diode (OLED), plasma), a Cathode Ray Tube (CRT) display, and the like.. It will also now be apparent that in some embodiments input device 212 can be a touch screen integrated with display device 216. Circuitry 220 can include any suitable combination of circuitry for controlling the relevant combination of flat panel display, CRT display and the like.. Circuitry 220 can therefore include, but is not limited to, display buffers, transistors, LCD cells, plasmas cells, phosphors, electron beam controllers and the like. As will be appreciated by those skilled in the art, display buffers can comprise memories into which data is loaded from memory 208 for generation of representations by display device 216.

Mobile electronic device 104 also includes a communications interface 228 interconnected with processor 204. Communications interface 228 allows mobile electronic device 104 to communicate with other computing devices via links 108 and 112 and their respective networks.. It will be understood that communications interface 228 can therefore be selected for compatibility with links 108 and 112 as well as with networks 116 and 120.

Mobile electronic device 104 can also include various other components. For example, output devices (not shown) such as a speaker, a light-emitting indicator such as a Light Emitting Diode (LED), a motor for vibrational output, and the like, are all contemplated. The various components of mobile electronic device 104 are interconnected, for example via a communication bus (not shown). Mobile electronic device 104 can be powered by a battery (not shown).

Mobile electronic device 104 can include a phone application 232 maintained in memory 208.. Phone application 232 can comprise computer readable instructions for execution by processor 204. In general, processor 204 can be configured, by execution of phone application 232, to perform various actions as discussed below.

Returning to Figure 1, mobile electronic device 104 is operable to communicate over one or both of a first wireless link 108 based on a Wireless Local Area Network (WLAN, i.e. Wi-Fi) transport (in general, a transport based on the Institute of Electrical and Electronic Engineers ("IEEE") 802.11 standards) and a second wireless link 112 based on a mobile transport (such as, for example, Global System for Mobile communications ("GSM"), General Packet Radio Service ("GPRS"), Enhanced Data rates for GSM Evolution ("EDGE"), Code Division Multiple Access ("CDMA") and the third-generation mobile communication system (3G)).

Link 108 connects mobile electronic device 104 to a Wide Area Network (WAN) 116 such as the Internet, while link 112 connects mobile electronic device 104 to a Public Land Mobile Network (PLMN) 120. It will be appreciated that networks 116 and 120 can also be connected, for example via a link 124. It will be understood that links 108 and 112 each include any access points and/or base stations, and backhaul links necessary to connect mobile electronic device 104 to networks 116 and 120, respectively.

System 100 also includes a Local Area Network (LAN) 124, such as an enterprise intranet, which can be accessible from WAN 116 via a link 128 and a firewall 132. Connected to LAN 124 via respective links 136 and 140 are an enterprise server 144 and a Private Branch exchange (PBX) 148, It will be understood that although it is simply referred to as "PBX" herein, in some embodiments PBX 148 can be an IP PBx. In addition to LAN 124, PBX 148 can be connected to the Public Switched Telephone Network (PSTN) 152 via a link 156. It will now be apparent that PBX 148 can also communicate with PLMN 120 via link 156, PSTN 152 and a further link 160. PBX 148 can also be connected to any number of enterprise-associated telephone sets, such as telephone set 162, which can be digital or analog.

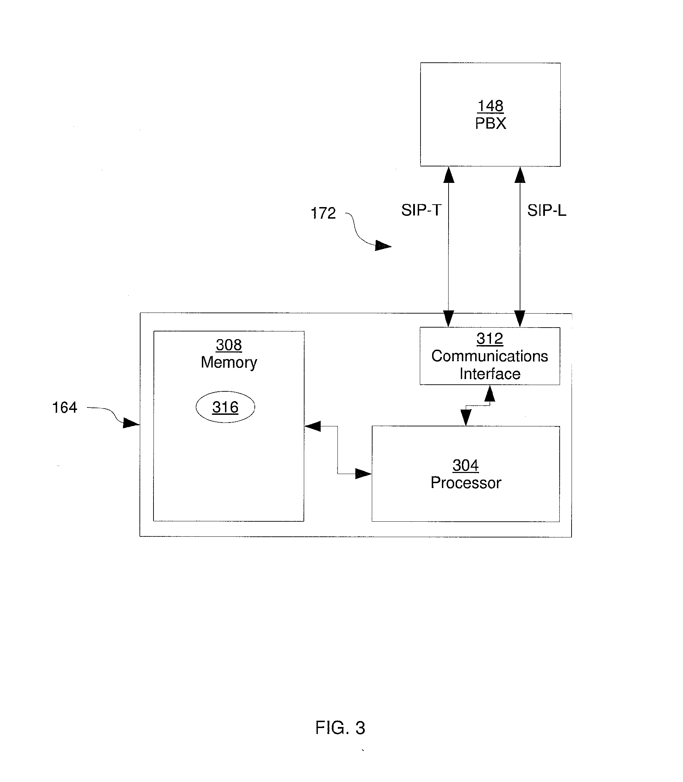

System 100 also includes a Session Management Platform (SMP) 164 connected to enterprise server 144 via a link 168 and to PBX 148 via a link 172. SMP 164 and enterprise server 144 can each be based on any well-known server environment. Thus, referring to Figure 3, in some embodiments SMP 164 can comprise one or more processors, such as processor 304. SMP 164 also includes a memory 308 interconnected with processor 304, which can comprise any suitable combination of volatile (e.g. Random Access Memory ("RAM")) and non-volatile (e.g. read only memory ("ROM"), Electrically Erasable Programmable Read Only Memory ("EEPROM"), flash memory, magnetic computer storage device, or optical disc) memory. SMP 164 also includes a communications interface 312 interconnected with processor 304. In general, communications interface 312 allows SMP 164 to communicate with other computing devices and networks via links 168 and 172. It will be understood that communications interface 312 can therefore be selected for compatibility with links 168 and 172 and any associated networks.

SMP 164 also includes a call control application 316, which can be maintained in memory 308.. Call control application 316 can comprise computer readable instructions for execution by processor 304.. In general, processor 304 can be configured, via execution of call control application 316, to extend various features of enterprise telephony to mobile electronic device 104 by exerting control over PBX 148.. For example, SMP 164 and PBX 148 can allow mobile electronic device 104 to perform functions akin to those normally available on a standard office telephone, such as telephone set 162. Examples of such features include, but are not limited to, direct extension dialling, enterprise voice mail, conferencing, call transfer, call park and the like.

SMP 164 can act to manage calls in which mobile electronic device 104 participates by controlling, or managing, call sessions at PBX 148 over link 172. In some embodiments, call sessions can be controlled (that is, created, modified and terminated) by processor 304 of SMP 164 using the Session Initiation Protocol (SIP) to communicate with PBX 148. In such embodiments, link 172 includes two SIP interfaces: a SIP-Trunk (SIP-T) interface and a SIP-Line (SIP-L) interface. The SIP-T interface can be used by SMP 164 to manage the call session between PBX 148 and mobile electronic device 104, while the SIP-L interface can be used by SMP 164 to manage the call session, or sessions, between PBX 148 and the other party or parties to the call. It will be appreciated that such other parties may comprise any combination of telephones internal to LAN 124, such as telephone 162, other devices which are not associated with the enterprise (e.g. mobile electronic devices, telephones, personal computers executing telephony applications), and the like..

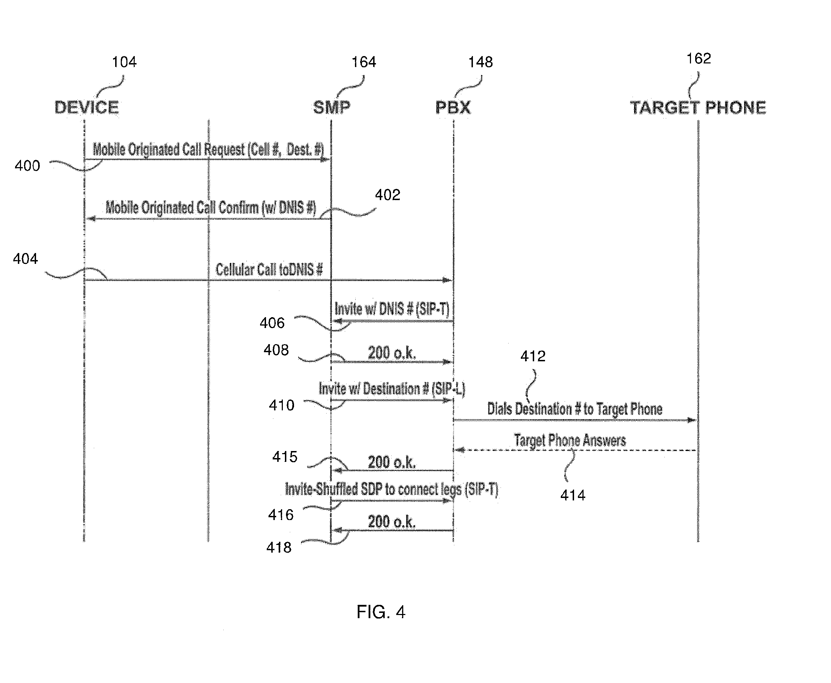

Turning now to Figures. 4 to 7, the general operation of the system 100 will be discussed, although it is recognized that the present system is not limited to the processes discussed herein. The signalling descriptions that follow are based on a "Third Party Call Control" architecture, in which SMP 164 handles call control but not call media. It will be appreciated that similar but slightly modified signalling may be used in a "First Party Call Control" architecture, in which the PBX 148 passes media through to the SMP 164 for direct media handling by the SMP 164. Variations in the signalling to adapt to various architectures will be appreciated by those skilled in the art.

Figure 4 provides a signalling diagram for a call originating from mobile electronic device 104 to a target phone, such as telephone 162 (which will hereinafter be referred to as both telephone 162 and target phone 162), connected to PBX 148. First, mobile electronic device 104 sends a mobile originated call request with its cellular number and the destination number of target phone 162 to SMP 164 (block 400). In some embodiments, the mobile originated call request may be sent through enterprise server 144. In other embodiments, the call request may be sent via PLMN 120 and PSTN 152 through PBX 148, for example as an SMS message or using another messaging operation. SMP 164 confirms the call request by sending the Dialled Number Identification Service (DNIS) number to mobile electronic device 104 (block 402). Next, mobile electronic device 104 makes a cellular call using the DNIS number, which is received by PBX 148 (block 404). As the DNIS has been configured in PBX 148 to be routed to SMP 164 via the SIP-T interface of link 172, in response to the incoming call, PBX 148 sends an invite over SIP-T with the DNIS number to SMP 164 (block 406). SMP 164 matches the incoming call with the expected call from the mobile, and if correct, acknowledges the invite by sending a 200 OK signal to PBX 148, indicating that the mobile call leg is established (block 408).

SMP 164 then sets up the outgoing call leg to the destination. It does this by sending an invite over SIP-L to PBX 148 with the destination number of the target phone (block 410). SIP-L is used so that the call can be correctly attributed to the individual within the organization within any call records that are being maintained by PBX 148. When the invite is received, PBX 148 dials the destination number to target phone 162 (block 412), and target phone 162 answers the call (block 414). When target phone 162 is answered, PBX 148 sends a 200 OK signal to SMP 164 indicating that target phone 162 is ready to receive media (block 415). SMP 164 then sends an invite over SIP-T to PBX 148 and shuffles the Session Description Protocol (SDP, as known to those skilled in the art) session to connect the call legs (block 416). When the call legs are connected, PBX 148 sends a second 200 OK signal to SMP 164 (block 418), and mobile electronic device 104 and target phone 162 can communicate with each other.

Note that between the cellular call leg being established and the outgoing call leg being answered, ringing tones are provided to mobile electronic device 104. These ringing tones may be provided by PBX 148 using the presentation of early media from the outgoing call leg, or they may be generated locally on mobile electronic device 104 if early media is not available.. In the latter case, it will be necessary to localize the ringing tone to match the tone normally provided with a call through PBX 148.

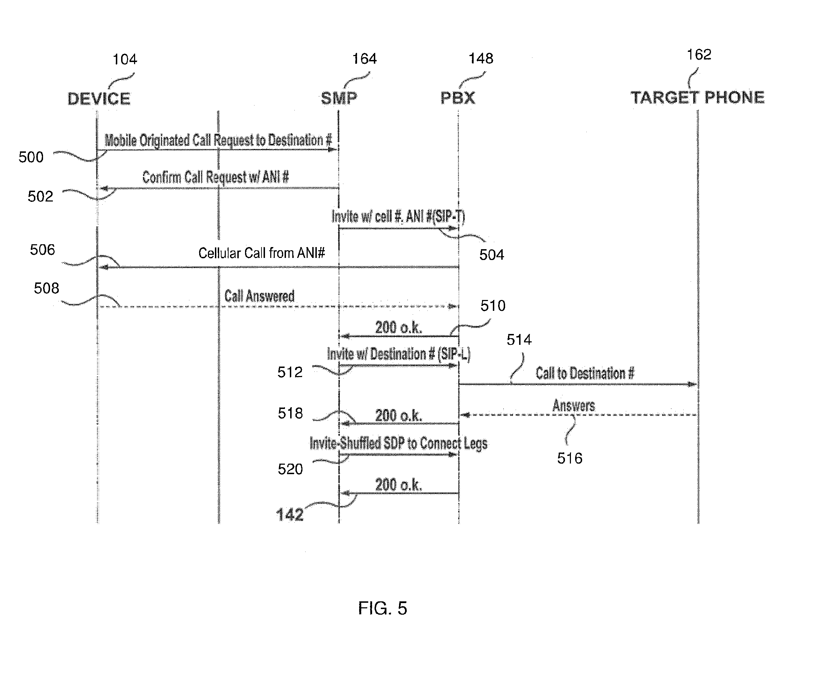

The above description is known as a "mobile initiated" call, because SMP 164 provides mobile electronic device 104 with the DNIS number into which mobile electronic device 104 has called. Alternatively, the mobile originated call could be "PBX initiated", as shown in Figure 5. Specifically, in a PBX-initiated call, upon receipt of the mobile originated call request (block 500), SMP 164 confirms receipt of the call to mobile electronic device 104 with an Automatic Number Identification (ANI) number (block 502), which mobile electronic device 104 uses to identify the incoming call from PBX 148. SMP 164 then sends an invite over SIP-T to PBX 148 with the cellular number of mobile electronic device 104 and the ANI number that is attached to the outgoing call (block 504). Upon receipt of the invite, PBX 148 makes a cellular call to mobile electronic device 104 (block 506), which is answered by mobile electronic device 104 (block 508). Mobile electronic device 104 checks the ANI number in the incoming call to confirm if the number is actually from PBX 148. If the ANI number is stripped for any particular reason, then mobile electronic device 104 can be configured to answer the call as a regular cellular call, or to reject the call as unknown. When mobile electronic device 104 answers the PBX-initiated call, PBX 148 sends a 200 OK signal to SMP 164, indicating that the call leg to the device is established (block 510).

In response, SMP 164 sends an invite over SIP-L with the destination number of target phone 162 to PBX 148 (block 512). When the invite is received at PBX 148, PBX 148 dials the destination number to target phone 162 (block 514), target phone 162 picks up the call (block 516), and a 200 OK signal is sent from PBX 148 to SMP 164 (block 518), indicating that target phone 162 is also ready to receive call media. In response to the 200 OK, SMP 164 sends an invite to PBX 148, shuffling the SDP session to connect the call legs (block 520). Finally, when the call legs are connected, PBX 148 sends a second 200 OK signal to SMP 164, and mobile electronic device 104 and target phone 162 are able to communicate with each other..

In both the above instances, SMP 164 is performing third party call control of the two call legs, with SMP 164 remaining in control of the call. The decision of whether to proceed with a mobile-initiated call or a PBX-initiated call can be set by policy. Specifically, the option to select either mobile-initiated or PBX-initiated calls is a feature provided in SMP 164, and an administrator for LAN 124 can determine which setting to use. For example, in some cases it may be more cost effective for an enterprise to utilize PBX-initiated calls rather than mobile-initiated calls, and vice versa. However, it is appreciated that system 100 is not limited to the above processes.

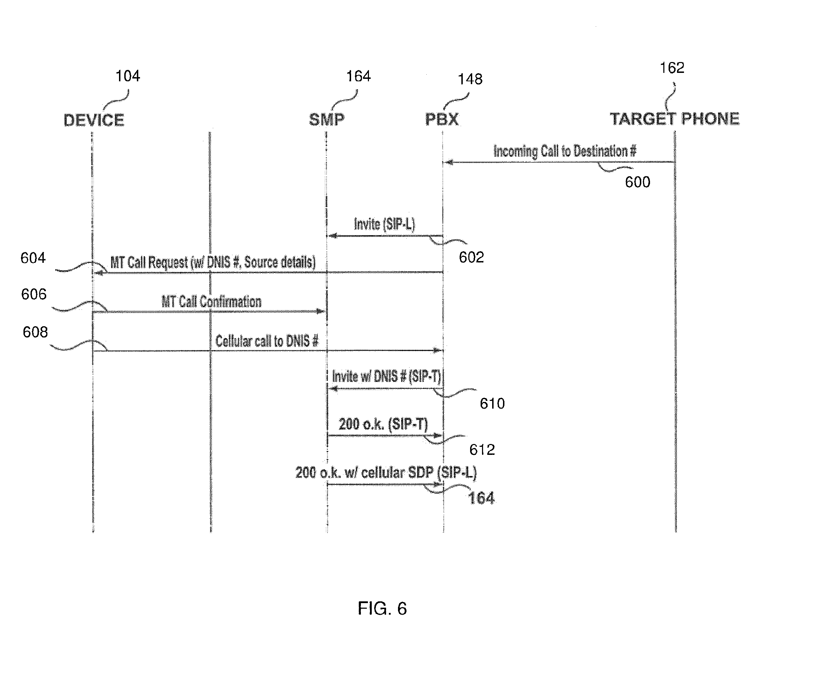

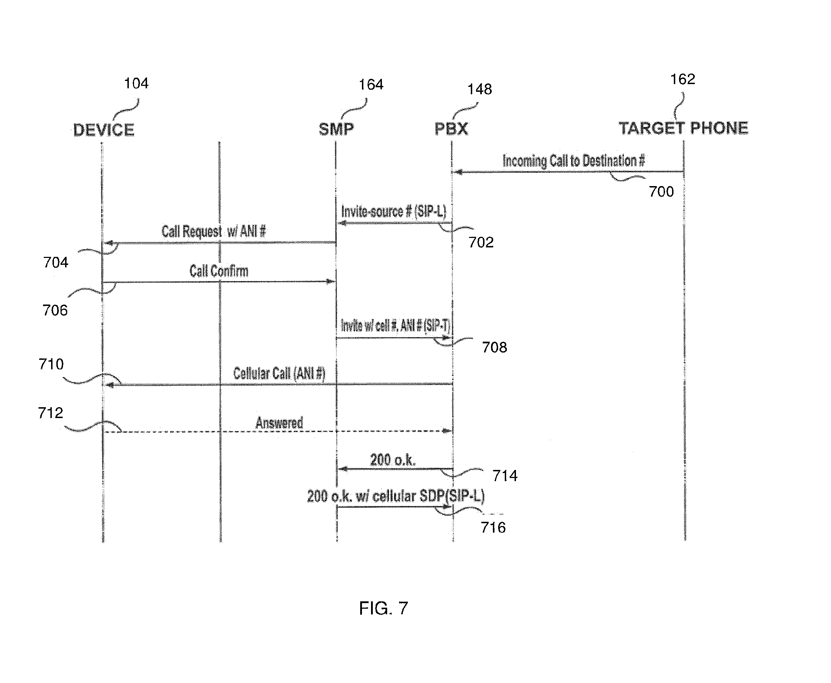

Figures 6 and 7 are signalling diagrams illustrating a mobile terminated call utilizing SIP. Specifically, and for the purposes of this disclosure, telephone 162 is originating the call, which will send a call to mobile electronic device 104. Turning first to Figure 6, an incoming call is made from target phone 162 to PBX 148 (block 600). When the call is received at PBX 148, PBX 148 sends an invite to SMP 164 over SIP-L (block 602).

In response to the invite, SMP 164 sends a call request with the DNIS number and source details to mobile electronic device 104 (block 604), which is confirmed to SMP 164 (block 606). In addition to confirming the call, mobile electronic device 104 sends a cellular call to the DNIS number at PBX 148 (block 608). Again, as the DNIS number is routed in the dialling plans to SMP 164, upon receipt of the cellular call, PBX 148 sends an invite over SIP-T to SMP 164 with the DNIS number (block 610). In response to the invite, a "200 OK" signal is sent over SIP-T from SMP 164 to PBX 148, acknowledging that the call leg to mobile electronic device 104 is established (block 612). Finally, the initial invite (block 602) is acknowledged with the "200 OK" signal containing the cellular SDP, at which point the call legs are joined and target phone 162 and mobile electronic device 104 can communicate with each other on the call.

The diagram shown in Figure 6 illustrates a "mobile-initiated" call, because, as discussed above with respect to Figures 4 and 5, SMP 164 presents mobile electronic device 104 with the DNIS number at PBX 148 into which to call. However, it is also possible to employ a "PBX-initiated" mobile terminated call, as shown in Figure 7, where PBX 148 sends an incoming call to mobile electronic device 104 with the ANI number of target phone 162.

Specifically, similar to the mobile-initiated call described above and shown in Figure 6, target phone 162 sends an incoming call to the destination number of mobile electronic device 104, which is received at PBX 148 (block 700). Upon receipt of the call, PBX 148 sends an invite over SIP-L to SMP 164 (block 702) with the source number of target phone 162. In response to the invite, SMP 164 sends a call request with the source number to mobile electronic device 104 (block 704), with the ANI number mobile electronic device 104 should expect in the incoming call, the call request being confirmed by mobile electronic device 104 (block 706). At this point in the PBX-initiated call, SMP 164 sends an invite over SIP-T to PBX 148 with the cellular number and ANI number to use (block 708), prompting PBX 148 to make a cellular call to mobile electronic device 104 with the ANI number (block 710), prompting mobile electronic device 104 to ring. Mobile electronic device 104 answers the call (block 712), and a "200 OK" signal is sent from PBX 148 to SMP 164, acknowledging that the cellular call leg to mobile electronic device 104 is established (block 714). In response, a "200 OK" signal is also sent from SMP 164 to PBX 148, acknowledging that the call leg to target phone 162 is also established (block 716). SMP 164 shuffles the SDP session to connect the call legs, the call legs are joined, and target phone 162 and mobile electronic device 104 can communicate with each other on the call..

As discussed above with respect to Figures 4 and 5, SMP 164 remains in control of the signalling between target phone 162 and mobile electronic device 104 in both the mobile-initiated and PBX-initiated calls. Again, the decision to proceed with a mobile-initiated call or a PBX-initiated call is based on policy and may be set by a system administrator. In some cases, it may be more efficient or cost effective for the administrator to decide that PBX-initiated calls should be used, and in other cases, it may be more efficient or cost effective for mobile-initiated calls to be utilized. As these policy decisions may vary by organization and are not imperative to the scope of the present application, they will not be discussed in further detail.

Referring again to Figure 1, it will now be apparent that mobile electronic device 104 can participate in the above-described calls via either one of links 108 (i.e. a Voice over WLAN, or VoWLAN, call) and 112 (i.e. a mobile or cellular call). When mobile electronic device 104 participates in a call via link 108, call media (e.g. voice streams, video streams and so on) is carried over link 108 to and from WAN 116 and over link 128 to and from LAN 124. Within LAN 124, call media can be carried over link 140 to and from PBX 148 for transfer to and from the other party or parties to the call. It will be appreciated that in some embodiments, call media can also travel to and from PBX 148 via SMP 164 and enterprise server 144. In such embodiments, SMP 164 can thus include media server functionality in addition to call control functionality.

When mobile electronic device 104 participates in a call via link 112, call media is carried over link 112 to and from PLMN 120. Call media can then be carried to and from PBX 148 via links 160 and 156. Call data (i.e. signalling) can be carried between mobile electronic device 104 and WAN 116 either via link 108, or via links 112 and 124. Call data can then be carried to and from SMP 164 via links 128, 136 and 168. Alternatively, call data can be carried to and from SMP 164 via a relay 176 connected to WAN 116 by a link 180 and to enterprise server 144 by a link 184. In other words, the path taken by call data is not necessarily the same as the path taken by call media. For instance, in some embodiments call media may only be permitted to travel over a mobile transport (i.e., links 112, 160 and 156) but call data may be free to travel over any transport. Additionally, in some embodiments call data can be carried between mobile electronic device 104 and SMP 164 over links 112, 160, 156 and 172. For example, some networks to which mobile electronic device 104 can connect for participating in a call will not allow mobile electronic device 104 to transmit both media and data simultaneously. In such networks, signalling for the call must be carried within the call media, for example as Dual-Tone Multi-Frequency (DTMF) tones.

Processor 204 of mobile electronic device 104 can be configured, via execution of phone application 232, to initiate a handoff (also referred to as a handover) of a call in which mobile electronic device 104 is participating. The handoff can result in a call being transferred from a first transport over which the call is proceeding (which can be one of a Wi-Fi transport and a mobile transport) to a second transport over which the call is to proceed following the handoff (which can be the other of the Wi-Fi transport and the mobile transport).

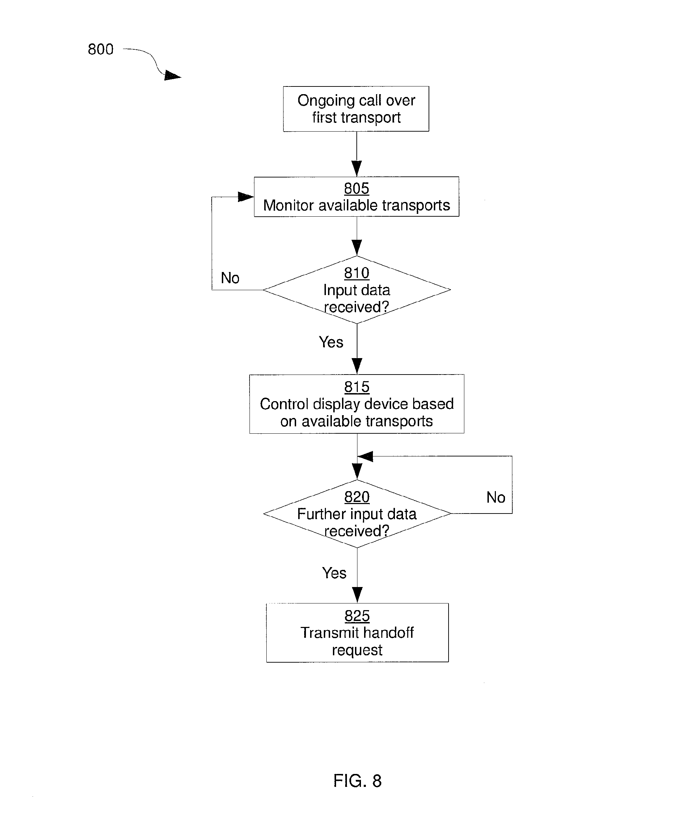

Referring now to Figure 8, a flowchart is depicted showing a method 800 of initiating call handoff between first and second transports. As seen in Figure 8, processor 204 of mobile electronic device 104 can be configured to perform method 800 after a call has been initiated over a first transport. The call can be initiated, for example, according to any of the scenarios discussed above or variations thereto.

Beginning at block 805, processor 204 can be configured to monitor available transports. It will now be apparent that block 805 can be performed in conjunction with communications interface 228, which enables links 108 and 112 to be established and maintained. In the context of method 800, a transport is deemed to be "available" when it is currently ready for use in carrying a call. That is, a transport is available if a link to mobile electronic device 104 using that transport has been established, and the link is determined by processor 204 to be usable in carrying a call.. Processor 204 can determine if a link is usable or not by verifying, for example, whether mobile electronic device 104 has permission to use the link for a call, whether the link can be used to successfully communicate with enterprise server 144 and SMP 164, and so on. For example, some WLAN access points may only allow certain types of traffic to and from mobile electronic device 104, thus preventing links with those access points from being used for calls. In such situations, processor 204 would determine that the Wi-Fi transport is not available as part of the performance of block 805. Identifiers corresponding to the one or more transports deemed available at block 805 can be maintained in memory 208. Such identifiers can be plain text (e.g. "Wi-Fi" or "mobile"), numeric (e.g. "1" for Wi-Fi, "2" for mobile) and the like. Other suitable identifiers will also occur to those skilled in the art.

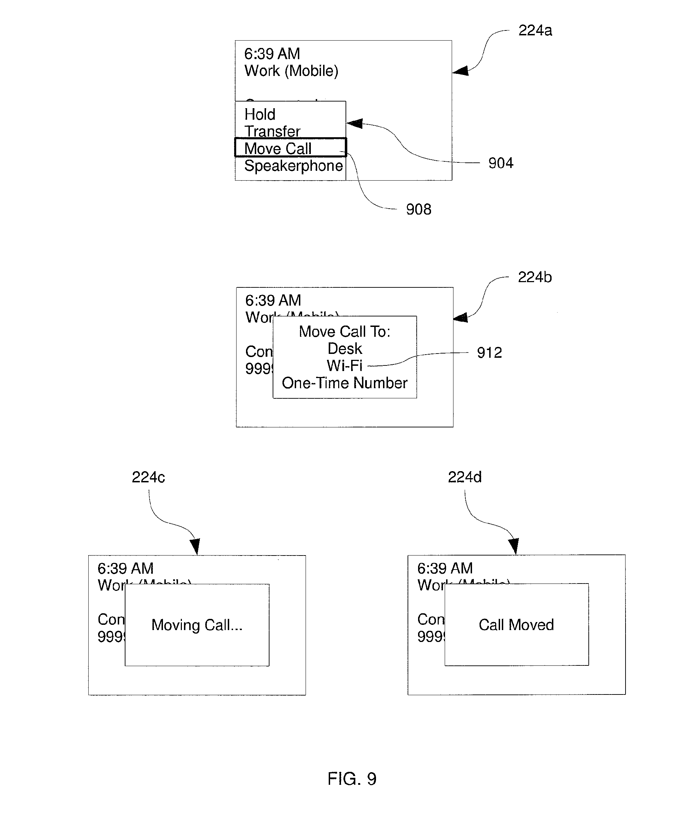

Proceeding to block 810, processor 204 determines whether input data has been received from input device 212 indicative of a selection of a "move call" command. Referring briefly to Figure 9, a representation 224a generated by display device 216 under the control of processor 204 is shown. Representation 224a is a representation of data including a menu 904 (which, it will be appreciated, can be maintained in memory 208) with a "Move Call" option 908, shown selected in Figure 9. If no input data reflecting a "move call" command is determined to have been received at block 810, processor 204 can return to block 805. If, however, the determination at block 810 is affirmative (that is, if a selection of option 908 has been made) then method 800 proceeds to block 815.

At block 815, processor 204 can be configured to control display device 216 to generate an updated representation based on the available transports detected at block 805. Referring again to Figure 9, an exemplary representation 224b is shown, which is representative of menu data (which, again, can be maintained in memory 208) for various options relating to moving calls. For example, a "Desk" option can be provided to transfer the call from mobile electronic device 104 to a telephone (which can be similar to telephone 162) within LAN 124 that is associated with mobile electronic device 104. Additionally, an option 912 can be provided for handing the call over from the current transport over which call media is being carried (a mobile transport, in the example of Figure 9) to another transport, such as a Wi-Fi transport. It will now be apparent that option 912 is not necessarily a Wi-Fi handoff option. For example, if the call is currently proceeding over a Wi-Fi transport and a mobile transport is available, option 912 can instead be a mobile handoff option. It will also be appreciated that if, at block 805, no other transports were determined to be available, option 912 can be omitted entirely. Option 912 can also be omitted if, for instance, mobile electronic device 104 does not have permission to use the call handoff feature.

Following performance of block 815, processor 204 proceeds to block 820, at which a determination is made as to whether further input data has been received. The further input data contemplated at block 820 comprises input data received from input device 212 and indicating a selection of option 912 shown in representation 224b. If the determination at block 820 is negative, processor 204 can wait at block 820 until an affirmative determination is made, or until other input data is received which ends method 800 (such as input data indicating selection of a "back" key). If the determination at block 820 is affirmative, method 800 proceeds to block 825.

At block 825, following selection of option 912 as shown in Figure 9, processor 204 can be configured to transmit, via communications interface 228, a handoff request to SMP 164. Following transmission of the handoff request at block 825, processor 204 can further be configured to control display device 216 to generate an updated representation 224c as shown in Figure 9.

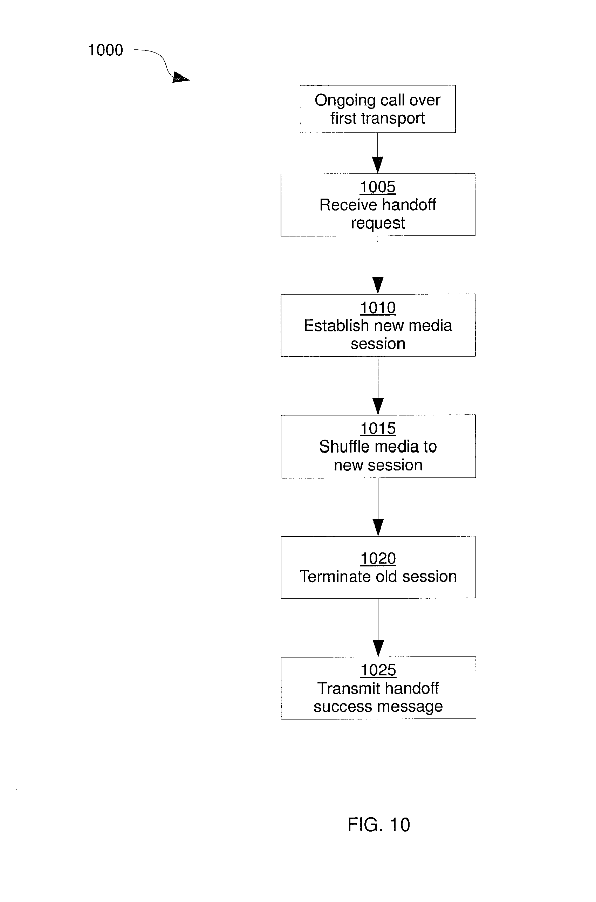

Turning now to Figure 10, a flowchart of a method 1000 of managing call handoff at SMP 164 is depicted. Processor 304 of SMP 164 can be configured to perform method 1000 via execution of call control application 316 maintained in memory 308.

Performance of method 1000 begins at block 1005, at which processor 304 receives, via communications interface 312, a handoff request from mobile electronic device 104. It will be appreciated that the handoff request, being call data (i.e. signalling) can be carried to SMP 164 via a variety of combinations of links in system 100, as discussed above. The handover request can include an indication of which transport mobile electronic device 104 intends to move the call to.

Following the performance of block 1005, method 1000 proceeds to block 1010. At block 1010, processor 304 can be configured to establish a new media session with mobile electronic device 104. The new media session can be established over the transport to which the call is being handed off, and can be established between mobile electronic device 104 and PBX 148. It will be appreciated that in other embodiments where SMP 164 handles media as well as call control, the new media session can be established directly between SMP 164 and mobile electronic device 104.

Once the new media session has been established at block 1010, method 1000 proceeds to block 1015. At block 1015, processor 304 can be configured to shuffle media for the call from the existing or "old" session with mobile electronic device 104 to the new session established at block 1010. In general, performance of block 1015 involves transmitting media session parameters (for example, using SDP) to one or both of mobile electronic device 104 and PBX 148, as will be discussed in further detail below.

Following the successful shuffling of media from the existing media session to the new media session, method 1000 proceeds to block 1020, at which the existing media session is terminated or "torn down" by transmitting end notifications to one or both of mobile electronic device 104 and PBS 148.

Performance of method 1000 concludes at block 1025, at which processor 304 can be configured to transmit a notification to mobile electronic device 104 indicating that the call handoff was successful. Following receipt of the handoff success message, the call can continue, uninterrupted or substantially uninterrupted, with media being carried to and from mobile electronic device 104 over the new transport. Referring briefly to Figure 9, processor 204 of mobile electronic device 104 can be configured, via execution of phone application 232, to control display device 216 to generate an updated representation 224d following receipt of the handoff success message.

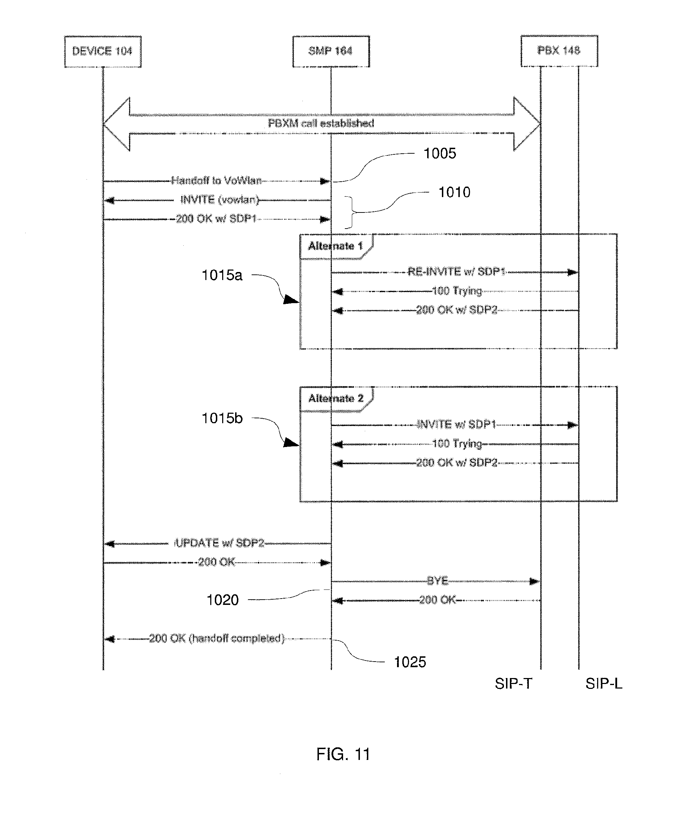

Referring now to Figure 11, an exemplary signal flow is depicted for the performance of method 1000 in a "rove-in" scenario, in which mobile electronic device 104 is participating in a mobile (also referred to as "PBXM") call over a mobile transport and initiates a handoff of the call media to a VoWLAN call over a Wi-Fi transport. Mobile electronic device 104 transmits a handoff request, which is received by SMP 164 at 1005. The handoff request contains an indication that mobile electronic device 104 intends to move the call media from the established mobile session between mobile electronic device 104 and PBX 148 to a VoWLAN session. SMP 164, in response to receiving the handoff request, sends an INVITE message to mobile electronic device 104 to establish a new Wi-Fi session. Mobile electronic device 104 responds by sending a 200 OK message including media session parameters ("SDP1," which can include a network address and port for mobile electronic device, the media codec or codecs and media formats that mobile electronic device intends to use, and the like).

Once the new media session with mobile electronic device 104 has been established, SMP 164 shuffles call media from the existing session to the new session and joins the new session with the media session between PBX 148 and the other call party or parties. Two alternatives (1015a and 1015b) for shuffling are shown.. In general, SMP 164 sends either a "RE-INVITE" message via SIP-L with the session parameters from mobile electronic device 104 or an "INVITE" message with the session parameters from mobile electronic device 104. As a result or either alternative, PBX 148 sends a 200 OK message to SMP 164 including media session parameters that PBX 148 will use for the call leg between PBX 148 and (for example) target phone 162. Which alternative is used can be determined according to the capabilities of PBX 148. In particular, PBX 148 can be configured to relay DTMF tones to SMP 164 in case call data arrives via DTMF tones. Two mechanisms for relaying DTMF tones are generally relied upon: Keypad Stimulus Protocol (KPML) and "2833" (as defined in IEEE Request For Comments (RFC) 2833). When PBX 148 supports dynamic switching between KPML, which is used for mobile calls, and 2833, which is used for Wi-Fi calls, alternative 1015a can be used, as it allows for the re-use of the existing dialog between SMP 164 and PBX 148 for managing the media session with target phone 162. When PBX 148 does not support such dynamic switching, however, alternative 1015b can be used to set up a new dialog between SMP 164 and PBX 148.

Performance of block 1015 is concluded when SMP 164 sends an UPDATE message to mobile electronic device 104 which includes line media session parameters ("SDP2") which define the media session with the other party or parties to the call within PBX 148. Following receipt of the line media session parameters by mobile electronic device 104, mobile electronic device 104 is able to communicate with the other party over the Wi-Fi transport. SMP 164 then sends a BYE message over SIP-T to PBX 148 for causing PBX 148 to terminate the mobile session with mobile electronic device 104, which PBX 148 acknowledges with a 200 OK message. Finally, SMP 164 sends an indication to mobile electronic device 104 that the handoff was successful.

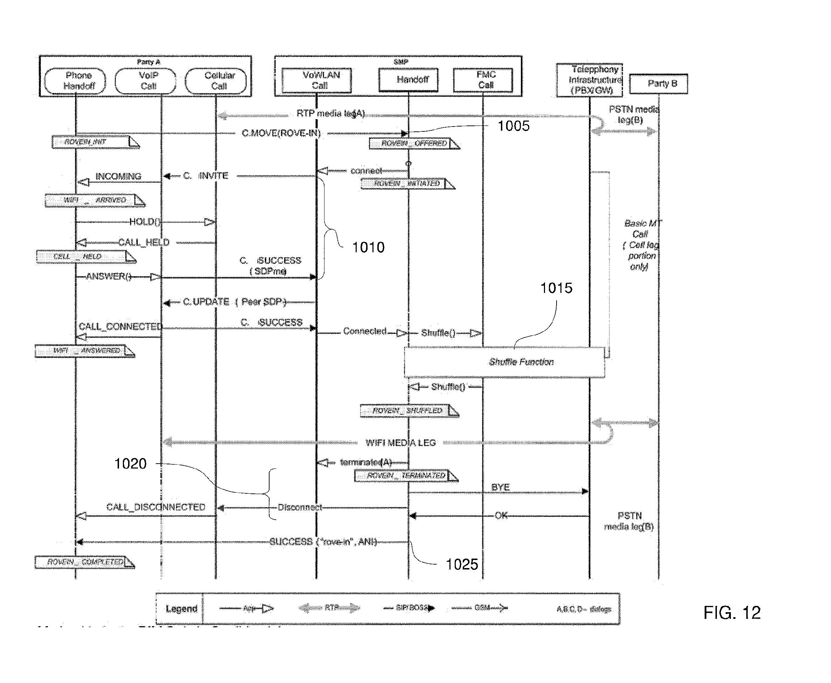

Referring to Figure 12, performance of method 1000 in the "rove-in" scenario is shown in further detail. It will now be apparent that "Party A" is mobile electronic device 104, and that the illustrated components within mobile electronic device 104 - "Phone Handoff," "VoIP Call" and "Cellular Call" - can be processes or threads managed by processor 204 executing phone application 232. Thus, additional signalling is shown within mobile electronic device 104, in which, following receipt of the new session INVITE message from SMP 164 (1010), the phone handoff thread instructs the cellular call thread to place the existing mobile session on hold while the handoff is conducted. Similarly, SMP 164 is illustrated as having multiple processes or threads - a "VoWLAN Call" thread, a "Handoff' thread and a "FMC Call" thread (Fixed Mobile Convergence) - which can be managed substantially simultaneously by processor 304 executing call control application 316. For example, as part of the performance of block 1020, the Handoff thread within SMP 164 instructs the VoWLAN Call thread - which manages the media session with mobile electronic device 104 - to end, while also instructing both PBX 148 and the Cellular Call thread of mobile electronic device 104 to tear down the existing mobile session.

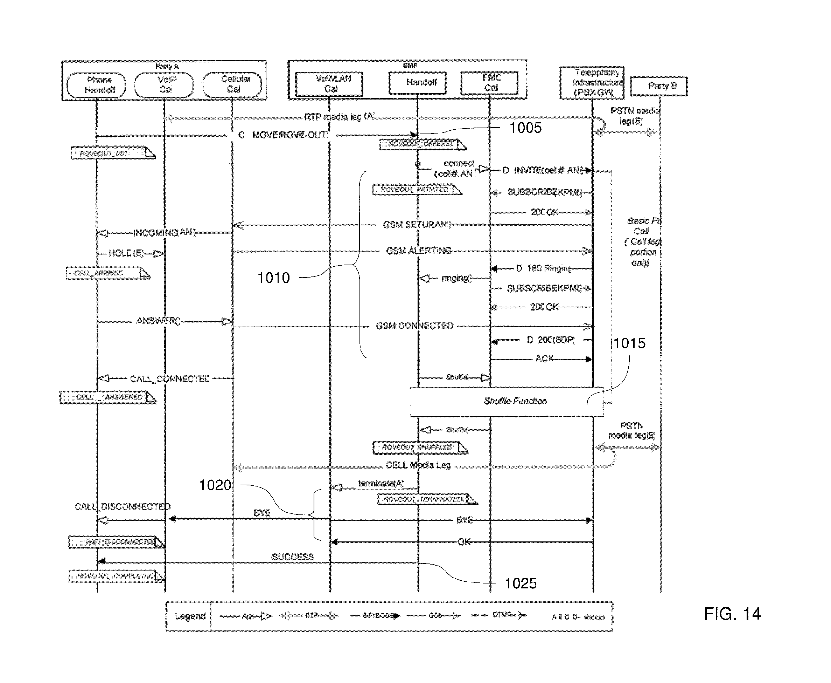

It is noted that certain protocols are shown in Figures 12 and 14: SIP or SIP-like (for example, a binary protocol with SIP-like message structure) signalling between SMP 164 and mobile electronic device 104 and between SMP 164 and PBX 148, and Real-time Transport Protocol (RTP) between mobile electronic device 104 and PBX 148 It will be understood that these protocols are merely examples, and that other suitable protocols may occur to those skilled in the art.

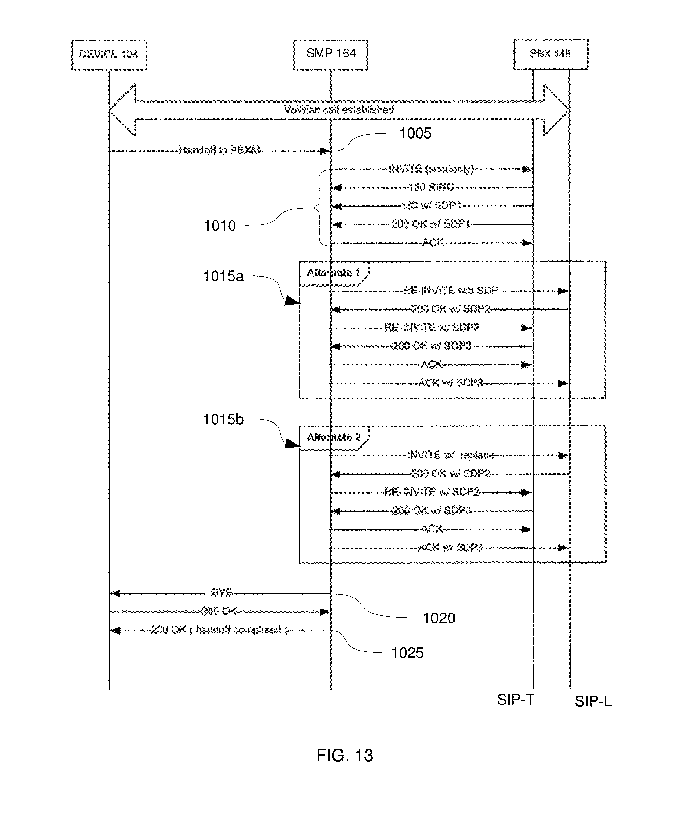

Referring now to Figure 13, an exemplary signal flow is depicted for the performance of method 1000 in a "rove-out" scenario, in which mobile electronic device 104 is participating in a VoWLAN call over a Wi-Fi transport and initiates a handoff of the call media to a mobile call. At 1005, SMP 164 receives a handoff request from mobile electronic device 104, including an indication that mobile electronic device 104 intends to move the ongoing call from a Wi-Fi transport to a mobile transport. At 1010, SMP 164 instructs PBX 148 to establish a new cellular session with mobile electronic device 104 via SIP-T. Referring to Figure 14, it can be seen that SMP 164 transmits an INVITE message to PBX 148 including the cellular number of mobile electronic device 104 and an ANI number This causes PBX 148 to place a cellular call, using GSM or any other suitable mobile transport, to mobile electronic device 102. As in the rove-in scenario, mobile electronic device places the existing Wi-Fi session on hold to answer the incoming mobile call. While waiting for mobile electronic device 104 to answer the mobile call, PBX 148 sends a 180 RING message to SMP 164. Once the call has been answered by mobile electronic device 104, PBX 148 sends a 200 OK message via SIP-T including the trunk media session parameters ("SDP1" in Figure 13) used by PBX to manage the media session with mobile electronic device 104. As seen in Figure 13, PBX 148 can also send a 183 message to SMP 164 with the trunk session parameters prior to sending the 200 OK message.

It is noted that during performance of block 1010 as seen in Figure 14, PBX 148 and SMP 164 can each send SUBSCRIBE messages to the other to set up DTMF tone relaying between PBX 148 and SMP 164. This ensures that in the event that call signalling is received by either PBX 148 and SMP 164 in the form of DTMF tones, the call signalling will reach its intended destination.

Following SMP 164's acknowledgment of the trunk session parameters, performance of method 1000 continues at 1015a or 1015b. As discussed above, two alternatives are provided to accommodate both PBXs capable to dynamic switching between DTMF tone relaying mechanisms and PBXs that lack such capabilities. In performing block 1015, SMP 164 sends a new INVITE message or a RE-INVITE message to PBX 148 via SIP-L to obtain line media session parameters ("SPD2"). Having obtained the line session parameters used by PBX 148 to manage the call leg between PBX 148 and the other party to the call, SMP 164 proceeds to join the two call legs by sending a RE-INVITE message via SIP-T including the line session parameters. PBX 148 returns refreshed trunk session parameters ("SDP3"), and SMP 164 provides those refreshed trunk session parameters to PBX 148 via SIP-L, thus joining the trunk and line media sessions, completing the media shuffle and allowing mobile electronic device 104 to communicate with the other party or parties.

Performance of method 1000 continues at block 120, at which a BYE message is sent by SMP 164 to mobile electronic device 104 and PBX 148 to terminate the Wi-Fi session between mobile electronic device 104 and PBX 148. Finally, SMP 164 sends a 200 OK message to mobile electronic device 104 indicating that the handoff concluded successfully.

It will now be apparent that other variations can also be made to the methods and system described herein. For example, in other embodiments, applications 232 and 316 can be maintained on computer readable storage media other than memory 208 and 308, respectively. Exemplary computer readable storage media include fixed, tangible storage media readable directly by processors 204 and 304 (e.g., removable diskette, CD-ROM, ROM, fixed disk, USB drive). Other exemplary computer readable storage media include remote storage from which computer readable instructions are transmittable to processors 204 and 304.

Those skilled in the art will appreciate that in some embodiments, the functionality of applications 232 and 316 can be implemented using pre-programmed hardware or firmware elements (e.g., application specific integrated circuits (ASICs), electrically erasable programmable read-only memories (EEPROMs), etc.), or other related components.

A portion of the disclosure of this patent document contains material which is subject to copyright protection.. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method (1000) of managing call handoff, comprising:
receiving a request (1005) from a mobile electronic device (104) to initiate handover of a first media session between the mobile electronic device (104) and a private branch exchange (PBX) (148) from a first transport to a second transport;
establishing (1010) a second media session with the mobile electronic device (104) over the second transport;
shuffling (1015) call media from the first media session to the second media session; and
responsive to shuffling the call media, terminating (1020) the first media session.

2. The method of claim 1, further comprising:
transmitting (1025) a message to the mobile electronic device (104) indicating that the handover completed successfully.

3. The method of claim 1 or claim 2, wherein the first transport is one of a Wi-Fi transport and a mobile transport, and wherein the second transport is the other of the Wi-Fi transport and the mobile transport.

4. The method of any one of claims 1 to 3, wherein the first transport is a mobile transport and the second transport is a Wi-Fi transport, and wherein establishing (1010) the second media session comprises:
transmitting a session invitation message to the mobile electronic device; and
receiving an acknowledgement message from the mobile electronic device, the acknowledgement message including device session definition parameters.

5. The method of claim 4, wherein shuffling (1015) call media comprises transmitting the device session definition parameters to the PBX (148).

6. The method of claim 5, wherein shuffling (1015) call media further comprises receiving line session definition parameters from the PBX (148) and transmitting the line session definition parameters to the mobile electronic device (104).

7. The method of any one of claims 1 to 3, wherein the first transport is a Wi-Fi transport and the second transport is a mobile transport, and wherein establishing (1010) the second media session comprises:
transmitting a command to the PBX (148) for causing the PBX to initiate a call to the mobile electronic device (104) over the mobile transport; and
receiving an acknowledgement message from the PBX (148), the acknowledgement message including device session definition parameters.

8. The method of claim 7, wherein shuffling call media comprises transmitting a request for line session definition parameters to the PBX (148).

9. The method of claim 8, wherein shuffling (1015) call media further comprises receiving line session definition parameters from the PBX (148) via a line interface, transmitting the line session definition parameters to the PBX (148) via a trunk interface, receiving refreshed trunk session definition parameters from the PBX (148) via the trunk interface, and transmitting the refreshed trunk session definition parameters to the PBX (148) via the line interface.

10. A method (800) of initiating call handoff, comprising:
monitoring (805) available transports;
receiving (810) input data indicative of a command to provide call handoff options;
controlling a display (815) device to generate a representation of at least one call handoff option based on the results of the monitoring;
receiving (820) input data indicative of a command to move an ongoing call from a first transport to a second transport; and
transmitting (825) a call handoff request.

11. The method of claim 10, wherein the call handoff request comprises an identifier of the second transport.

12. A server (164) for managing call handoff, the server configured to perform the method of any one of claims 1-9.

13. A mobile electronic device (104) for initiating call handoff, the mobile electronic device configured to perform the method of any one of claims 10-11.

## Amended claims

### Amended claims in accordance with Rule 137(2) EPC.

**1.** A method (1000) of managing call handoff, comprising:
receiving a request (1005) at a session management platform "SMP" (164) from a mobile electronic device (104) to initiate handover of a first media session between the mobile electronic device (104) and a private branch exchange "PBX" (148) from a Wi-Fi transport link to a mobile transport link;
establishing (1010) a second media session with the mobile electronic device (104) over the mobile transport link, the establishing of the second media session comprising:
transmitting a command from the SMP (164) to the PBX (148) for causing the PBX to initiate a call to the mobile electronic device (104) over the mobile transport link; and
receiving an acknowledgement message at the SMP (164) from the PBX (148), the acknowledgement message including device session definition parameters;
shuffling (1015) call media from the first media session to the second media session, wherein the shuffling comprises:
transmitting a request from the SMP (164) for line session definition parameters to the PBX (148); and
responsive to shuffling the call media, terminating (1020) the first media session.

**2.** The method of claim 1, further comprising:
transmitting (1025) a message to the mobile electronic device (104) indicating that the handover completed successfully.

**3.** A method (1000) of managing call handoff, comprising:
receiving a request (1005) at a session management platform "SMP" (164) from a mobile electronic device (104) to initiate handover of a first media session between the mobile electronic device (104) and a private branch exchange "PBX" (148) from a mobile transport link to a Wi-Fi transport link;
establishing (1010) a second media session with the mobile electronic device (104) over the Wi-Fi transport link;
shuffling (1015) call media from the first media session to the second media session; and,
responsive to shuffling the call media, terminating (1020) the first media session.

**4.** The method of claim 3, wherein the first transport link is a mobile transport link and the second transport link is a Wi-Fi transport link, and wherein establishing (1010) the second media session comprises:
transmitting a session invitation message to the mobile electronic device; and
receiving an acknowledgement message from the mobile electronic device, the acknowledgement message including device session definition parameters.

**5.** The method of claim 4, wherein shuffling (1015) call media comprises transmitting the device session definition parameters to the PBX (148).

**6.** The method of claim 5, wherein shuffling (1015) call media further comprises receiving line session definition parameters from the PBX (148) and transmitting the line session definition parameters to the mobile electronic device (104).

**7.** The method of claim 4, further comprising:
transmitting (1025) a message to the mobile electronic device (104) indicating that the handover completed successfully.

**8.** The method of claim 1, wherein shuffling (1015) call media further comprises receiving line session definition parameters from the PBX (148) via a line interface, transmitting the line session definition parameters to the PBX (148) via a trunk interface, receiving refreshed trunk session definition parameters from the PBX (148) via the trunk interface, and transmitting the refreshed trunk session definition parameters to the PBX (148) via the line interface.

**9.** A method (800) of initiating call handoff, comprising:
monitoring (805) available transport links at a mobile electronic device (104);
receiving (810) input data indicative of a command to provide call handoff options;
controlling a display (815) device to generate a representation of at least one call handoff option based on the results of the monitoring;
receiving (820) input data indicative of a command to move a first media session between the mobile electronic device (104) and a private branch exchange "PBX" (148) from a first transport link to a second transport link; and
transmitting (825) a call handoff request.

**10.** The method of claim 9, wherein the call handoff request comprises an identifier of the second transport link.

**11.** A server (164) for managing call handoff, the server configured to perform the method of any one of claims 1-8.

**12.** A mobile electronic device (104) for initiating call handoff, the mobile electronic device configured to perform the method of any one of claims 9-10.
